(19) Europäisches Patentamt
European Patent Office
Office européen des brevets

(11) **EP 4 187 280 B1**

(12) **EUROPEAN PATENT SPECIFICATION**

(45) Date of publication and mention
of the grant of the patent:
**22.05.2024 Bulletin 2024/21**

(21) Application number: **21210745.2**

(22) Date of filing: **26.11.2021**

(51) International Patent Classification (IPC):
*G01S 13/10* (2006.01)     *G01S 13/30* (2006.01)
*G01S 7/282* (2006.01)     *G01S 7/288* (2006.01)
*G01S 7/32* (2006.01)

(52) Cooperative Patent Classification (CPC):
**G01S 13/103; G01S 7/282; G01S 7/2886;
G01S 7/32; G01S 13/30**

(54) **A METHOD FOR PERFORMING RADAR MEASUREMENTS AND A RADAR DEVICE**

VERFAHREN ZUR DURCHFÜHRUNG VON RADARMESSUNGEN UND RADARVORRICHTUNG

PROCÉDÉ PERMETTANT D'EFFECTUER DES MESURES DE RADAR ET UN DISPOSITIF RADAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.05.2023 Bulletin 2023/22**

(73) Proprietor: **Acconeer AB
211 77 Malmö (SE)**

(72) Inventors:
• **MÅNSSON, Erik
224 81 LUND (SE)**

• **ALMERS, Peter
216 44 LIMHAMN (SE)**
• **NELANDER, Rikard
226 49 LUND (SE)**
• **AXHOLT, Andreas
224 74 LUND (SE)**

(74) Representative: **Lind Edlund Kenamets
Intellectual Property AB
Kungsportsavenyn 25
411 36 Göteborg (SE)**

(56) References cited:
**US-A1- 2018 011 181     US-B2- 7 248 205**

**Description**

Technical field

The present disclosure relates to a method for performing radar measurements, and a radar device.

Background

There is a growing interest in radar technology enabling short range and high precision measurements in industrial, medical, security as well as consumer applications. Non-limiting example applications include ranging and positioning, presence and gesture detection, and investigation of material properties such as thickness, size, dielectric properties, material composition etc.

In pulse-based radar systems the send time may be kept short, which in turn enables a lower power consumption. Ultra-wideband, UWB, pulses (e.g. a few GHz or more) may as an example allow pulse durations on the order of nanoseconds, hundreds of picoseconds or shorter. In a pulse-based radar system a radar pulse is transmitted to be reflected off a radar target, wherein the reflected radar pulse is received and analyzed, e.g. to determine a time-of-flight of the radar pulse, and/or other characteristics of the reflected pulse such as amplitude and phase.

Pulse-based radar systems operating in the millimetre band, or mmWave band, (herein considered to corresponds to the spectrum extending from 30 GHz to 300 GHz) are of particular interest as the short wavelength of mmWave radar pulses facilitates high accuracy measurements in short range applications. The high frequency of mmWave signals however introduces challenges during signal processing. For example, direct sampling of a mmWave radar pulse with a sufficient fidelity may put high demands on bandwidth and speed of the analog-to-digital conversion, in addition to requiring collection and processing of substantial amounts of data.

US 2018/0011181 A1 discloses a radar system that includes a radar transceiver device, which includes a transmitter front end circuit for transmitting a chirp signal towards an object. The radar transceiver device includes a receiver front end circuit for receiving the reflected chirp signal from the object. The radar transceiver device includes a voltage controlled oscillator to generate a transmitted chirp signal. The radar transceiver device includes a mixer configured to generate four intermediate frequency output signals having different phases. The radar system includes a controller device, which includes a processor, and a memory for storing the intermediate frequency output signals and instructions for executing in the processor. The instructions cause the processor to generate a complex FFT result by performing a FFT of the intermediate frequency output signals while using zero-padding. The instructions cause the processor to determine, using interpolation, a maximum amplitude in the FFT result and identifying the frequency corresponding to the maximum amplitude. The instructions cause the processor to calculate a distance to the object using the determined frequency.

US 7,248,205 B2 discloses a transmitter that emits into an intended search space a radar wave having a predetermined frequency pulse-modulated by a trigger pulse of a predetermined width. A receiver receives a reflected wave of the radar wave and outputs a receive signal. A local pulse generator outputs a local pulse signal having the predetermined frequency pulse-modulated by the trigger pulse delayed by the delay unit. A correlation value detector detects a strength correlation value between the receive signal and the local pulse signal. A delay time changing unit changes the delay time sequentially within a range of a predetermined period representing a generation period of the trigger pulse. A correlation value storage unit stores the strength correlation value detected for each delay time changed. A frequency distribution generator generates a frequency distribution of a stored correlation value against the delay time. A search control unit executes an analyzation for the intended search space based on a generated frequency distribution.

Summary

In view of the above, it is an object of the present inventive concept to provide an improved method and radar device for pulsed radar measurements enabling one or more of power efficiency and low computational complexity. Further or alternative objects may be understood from the following.

According to a first aspect of the present inventive concept, there is provided a method for performing radar measurements according to claim 1.

The method combines what may be referred to as a "time-diluted measurement approach", with a computationally efficient and data sparse estimation of amplitude and phase information of received radar pulses.

As will be further described herein, a time-diluted measurement approach may obviate the need for a "direct" sampling of a received radar pulse, by iteratively transmitting and receiving a signal comprising a reflection of the radar pulse, and correlating (i.e. mixing and integrating) the received signal with a reference pulse generated with a delay which is varied between the measurement. The reflection of the radar pulse comprised in the received signal may in the following be referred to as the reflected radar pulse.

The first, second, third and fourth delay times refer to respective delay times different from each other, i.e. four delay times of different values. The second delay time may be greater than the first delay time, the third delay time may be greater than the second delay time and the fourth delay time may be greater than the third delay time. More specifically, according to the method, the first, second, third and fourth delay times of the reference pulses are purposefully selected to correspond to sampling positions with a quarter wavelength spacing. The integrated mixing products of the first, second, third and fourth radar measurements may accordingly represent the reflected radar pulses (i.e. the cross-correlation between the reflected radar pulse and the reference pulse) at positions spaced 90 degrees in phase (i.e. at the carrier frequency of the radar pulses). Amplitude information representative of an in-phase component I and phase information representative of a quadrature component Q (i.e. an I/Q pair) may accordingly be estimated based on the first and second values, respectively.

Hence, amplitude and phase information for the reflection of the radar pulse in the received signal may be obtained from only four radar measurements. The minimum measurement time of a time-diluted measurement approach is typically bounded by the number of radar measurements and the pulse repetition frequency. Compared to a full I/Q demodulation approach based on samples spanning the full duration of the reflected pulse, the method hence enables a reduced measurement time since a temporally shorter measurement sequence may be used to obtain the requisite number of samples needed to estimate the amplitude and phase information.

The term "pulse" (e.g. "radar pulse" and "reference pulse") as used herein refers to an electro-magnetic oscillating signal having a carrier frequency and a limited temporal extension. Each pulse may include a plurality of oscillations or periods. The term "wavelet" may be used as a synonym to "pulse".

The term "mixing" as used herein refers to RF mixing / frequency mixing of two signals (e.g. a received radar pulse and a reference pulse) to obtain a mixing product.

The mixing of the received signal with the reference pulse may be performed by a mixer. By varying the delay between the first through fourth radar measurements, a relative time of arrival of the reference pulse at the mixer (e.g. at a first mixer input), with respect to a time of arrival of the reflected radar pulse of / within the received signal at the mixer (e.g. at a second mixer input) may be varied between the measurements.

The term "integrating" as used herein refers to an integration of a signal (e.g. the mixing product) by an integrator to obtain a time integral of the signal (e.g. the integrated mixing product).

The first, second, third and fourth radar measurements are to be understood as four separate radar measurements, each comprising: generating a respective radar pulse; transmitting the respective radar pulse; generating a respective reference pulse; receiving a signal comprising a reflection of the respective radar pulse from the radar target, as a respective received signal; mixing the respective received radar signal with the respective reference pulse generated with a delay with respect to the respective (transmitted) radar pulse set to a respective delay time (i.e. the first, second, third or fourth delay time) to obtain a respective mixing product; and integrating the respective mixing product to obtain a respective integrated mixing product.

The four radar measurements may form a sequence of radar measurements, i.e. be performed in a sequence. The designation of the radar measurements as "first", "second", "third" and "fourth" are however only intended as labels for the four radar measurements and may be performed in any order.

According to embodiments, the first, second, third and fourth radar measurements may form a group of consecutive radar measurements. This allows the measurements to be performed closely spaced in time. The accuracy of the estimated amplitude and phase information may thus be improved as a risk of changed measurement conditions (e.g. a changed distance to the radar target) between the consecutive radar measurements may be reduced.

The radar pulses of the first, second, third and fourth radar measurements (i.e. the transmitted radar pulses) may have a same waveform and magnitude. In other words, the radar pulses of the four radar measurements may be identical radar pulses in terms of waveform and magnitude.

Correspondingly, the reference pulses of the first, second, third and fourth radar measurements may have a same waveform and magnitude. In other words, the reference pulses of the four radar measurements may be identical reference pulses in terms of waveform and magnitude.

Identical transmitted radar pulses / reference pulses enables phase-coherent radar measurements. By phase-coherent measurements is hereby meant that there is phase-coherence (a constant predetermined phase-relationship) between sequentially transmitted / generated radar pulses / reference pulses. This may facilitate signal processing and increase measurement accuracy.

According to embodiments, mixing the received signal with the reference pulse may comprise filtering the received radar signal using a matched filter, wherein in the first, second, third and fourth radar measurements, a respective delay of the matched filter is set to the first, second, third and fourth delay time.

Each reference pulse may in other words be adapted such that the mixing achieves filtering of the received signal with a matched filter. The output from the mixing/filtering of each radar measurement may accordingly be denoted a (respective) filtered pulse.

A matched filter implies that each reference pulse has the same waveform and magnitude as the (original) transmitted radar pulse corresponding to the received reflection of the radar pulse.

A matched filter approach may facilitate phase-coherent measurements and improved signal-to-noise performance.

The radar pulses and reference pulses may have a carrier frequency in the mmWave band, i.e. a carrier frequency in a range from 30 GHz to 300 GHz.

The mmWave band facilitates high accuracy measurements in short range applications, using radar sensors and antennas with compact form factor.

The radar pulses and reference pulses may be ultra-wideband pulses, e.g. a bandwidth equivalent to a pulse duration in a range of 50 ps to 10 ns.

According to embodiments, the first, second, third and fourth radar measurement may each further comprise converting the integrated mixing product to a digital value, wherein a first, second, third and fourth digital value is obtained, and wherein determining the first value (i.e. representative of the in-phase component I) comprises calculating a difference between the first digital value (of the first measurement) and the third digital value (of the third measurement), and determining the second value (i.e. representative of the quadrature component Q) comprises calculating a difference between the second digital value (of the second measurement) and the fourth digital value (of the fourth measurement). The amplitude and phase information may hence be estimated simply and efficiently in a digital domain, e.g. using a digital signal processor. Calculating the first and second values (the I/Q pair) in a digital domain may further facilitate subsequent processing of the radar measurements.

According to embodiments the first, second, third and fourth radar measurements may form a first group of measurements and the method may further comprise:

performing a second group of measurements comprising first, second, third and fourth radar measurements with a first, second, third and fourth delay time, respectively, between generating the radar pulse and the reference pulse; and
determining a first value representing a difference between the integrated mixing product of the first and third radar measurements of the second set of measurements, and a second value representing a difference between the integrated mixing product of the second and fourth radar measurements of the second set of measurements.

That is, the first, second, third and fourth radar measurements of the second group of measurements may, like the first, second, third and fourth radar measurements of the first group of measurements each comprise: transmitting a radar pulse towards a radar target, generating a reference pulse, receiving a signal comprising a reflection of the radar pulse from the radar target, as a received signal, mixing the received signal with a reference pulse to obtain a mixing product, and integrating the mixing product to obtain an integrated mixing product; wherein, in the first, second, third and fourth radar measurements of the second group, generating the reference pulse is delayed with respect to generating the radar pulse by a first, second, third and fourth delay time, respectively, wherein a difference between the second and first delay time, between the third and second delay time, and between the fourth and third delay time, each corresponds to a quarter of a wavelength of the radar pulses.

The second group of measurements accordingly refers to a group of measurements corresponding to the first group of measurements, and which like the first group of measurements allows amplitude and phase information to be obtained from only four radar measurements.

Any discussion concerning the first, second, third and fourth radar measurements of the first group above may apply correspondingly to the first, second, third and fourth radar measurements of the second group.

The respective first, second, third and fourth delay times of the first and second groups of radar measurements may be equal and the method may further comprise comparing the first values and/or the second values based on the first and second groups of measurements. This allows performing the same first through fourth radar measurements two times (or more), and comparing the respective first values (e.g. first second I estimates) and/or the respective second values (e.g. first and second Q estimates). A changed radar response (e.g. a changed distance to the radar target) may thus be detected, e.g. as a change between the second values (first and second Q estimates).

Alternatively, the first, second, third and fourth delay times of the second group of radar measurements may differ from the first, second, third and fourth delay times of the first group of radar measurements. This allows performing radar measurements at different distance ranges. E.g. the first through fourth delay times of the first group of radar measurements may be set to enable measurement of a target at a first measurement distance, while the first through fourth delay times of the second group or radar measurements may be set to enable measurement of a target at a second measurement distance greater or smaller than the first measurement distance.

It is to be understood that the first, second, third and fourth delay times of the second group, like the delay times of the first set, corresponds to a quarter wavelength spacing of the sampling positions.

A spacing in terms of measurement distance between the first and second groups of measurements may exceed a quarter of a wavelength of the radar pulses. Since amplitude and phase information may be obtained independently from the first and second groups of radar measurements, the groups may be arbitrarily separated in space, in particular by more than a quarter of a wavelength. This may further contribute to enabling sparse sampling, also of extended measurement ranges.

According to embodiments, the method may comprise: performing a first plurality of groups of measurements (first groups of measurements), and subsequently performing a second plurality of groups of measurements (second groups of measurements,

wherein each first and second group of measurements comprises:

generating a radar pulse,
transmitting the radar pulse towards a radar target,
generating a reference pulse,
receiving a signal comprising a reflection of the radar pulse from the radar target, as a received signal,
mixing the received signal with the reference pulse to obtain a mixing product, and
integrating the mixing product to obtain an integrated mixing product,

wherein, in the first, second, third and fourth radar measurements of each group, the reference pulse is generated with a delay with respect to the radar pulse set to a first, second, third and fourth delay time, respectively, such that a difference between the second and first delay time, between the third and second delay time, and between the fourth and third delay time, each corresponds to a quarter of a wavelength of the radar pulses,
and the method further comprising, determining, for each first and second group of measurements, a first value representing a difference between an integrated mixing product of the first and third radar measurements of the group of measurements, and a second value representing a difference between an integrated mixing product of the second and fourth radar measurements of the group of measurements;
wherein the first plurality of groups of measurements span a first range of measurement distances and the second plurality of groups of measurements span a second range of measurement distances, forming a sub-range of the first range, and
wherein a spacing in terms of measurement distance between consecutive first groups of measurements exceeds a spacing in terms of measurement distance between consecutive second groups of measurements.

This enables a two-part measurement protocol comprising a (first) more sparsely distributed set of groups of radar measurements (a first "sweep") spanning a (first) wider distance range, and a subsequent (second) less sparsely distributed set of groups of radar measurements (a second "sweep") spanning a narrower (second) distance range within the wider distance range. A wider but more coarsely sampled distance range may hence be combined with a narrower but more finely sampled distance range.
The second groups of measurements (second sweep) may be configured responsive to the first group of measurements (first sweep). According to embodiments, the method may further comprise:

estimating a first distance to the radar target based on the first and second values determined for each first group of measurements;
thereafter determining the first, second, third and fourth delay times for each second group of measurements such that said first distance lies within the second distance range; and
estimating a second distance to the radar target based on the first and second values determined for each second group of measurements.

Hence, a first coarse estimate of a distance to the radar target may be obtained based on the first (sparsely distributed) groups of measurements, and responsive to the first estimate, the second groups of measurements may configured to allow a more precise estimation of the distance to the radar target.
According to a second aspect there is provided a radar device according to claim 14.
All advantages, embodiments, features and subject-matter discussed with reference to the method according to the first aspect may apply also to (and/or be combinable with) the radar device according to the second aspect, and vice versa. For example, the radar device may be configured to perform any of the method steps of the first aspect or embodiments of the first aspect.
According to embodiments, the radar device may further comprise an analog-to-digital converter (ADC), wherein the first, second, third and fourth radar measurement each may further comprise converting, by the ADC, the integrated mixing product to a digital value, wherein a first, second, third and fourth digital value is obtained, and
wherein the processing circuit may be configured to determine the first value by calculating a difference between the first and third digital value, and the second value by calculating a difference between the second and fourth digital value.
According to embodiments, the radar device may further comprise a timing circuit configured to output to the pulse generator circuitry a first trigger for triggering generation of a radar pulse (to be transmitted by the transmitter) and, after a controllable delay with respect to the first trigger, a second trigger for triggering generation of a reference pulse (to be mixed with a received radar pulse) to the pulse generator circuitry.
The pulse generator circuitry may be configured to, in response to the first trigger, generate a radar pulse, and, in response to the second trigger, generate a reference pulse.
The radar device may, in the first, second, third and fourth radar measurements, control the timing circuit to set the delay of the second trigger with respect to the first trigger to the first, second, third and fourth delay time, respectively.

A relative timing of a pair of a radar pulse and a reference pulse may thereby be controlled via the timing circuit.

## Brief description of the drawings

The above, as well as additional objects, features and advantages, may be better understood through the following illustrative and non-limiting detailed description, with reference to the appended drawings. In the drawings like reference numerals will be used for like elements unless stated otherwise.

Figure 1 is a block diagram of a radar device according to an embodiment.
Figure 2 is a flow-chart of an embodiment of a method for performing radar measurements.
Figure 3 is a schematic timing diagram of a radar measurement.
Figure 4 is a diagram showing the concept of a cluster.
Figure 5 illustrates example amplitudes (top) and phases (bottom) obtained from a number of successive pluralities of groups or radar measurements.
Figure 6 illustrate a similar example to Fig. 5 but for a radar target moving between the successive sweeps.

## Detailed description

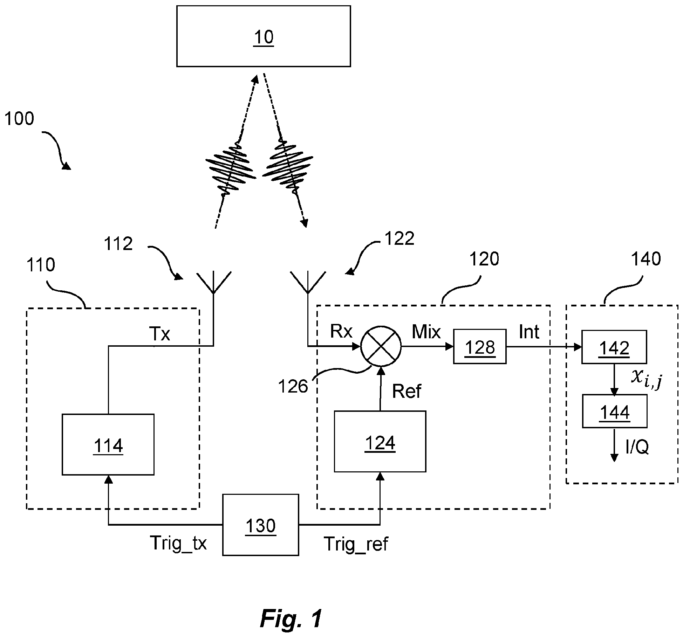

Figure 1 shows a radar device 100 according to an embodiment. The radar device 100 comprises a transmitter 110 and a receiver 120. The transmitter 110 is configured to transmit radar pulses Tx. The receiver 120 is configured to receive radar pulses Rx.

During operation of the radar device 100, the radar pulses Tx may be transmitted towards a radar target, indicated by reference sign 10. The radar pulses Tx may be reflected by the radar target 10 and be received by the receiver 120 as received signals, each comprising a reflection of a transmitted radar pulses Tx reflected off the radar target 10. In the following, the reflection of a transmitted radar pulse Tx comprised in a received signal will may referred to as a received radar pulse Rx. That is the designation "a received radar pulse Rx" designates the span of a received signal comprising the reflected signal energy of a transmitted (and then reflected) radar pulse Tx.

As may be appreciated, the type of radar target 10 is dependent on the application of the radar device 100. In a gesture detection application the radar target 10 may be a hand or a finger of a user locate in relative proximity to an electronic device (e.g. a tablet computer, a laptop computer, a media player, a smart watch, headphones or some other electronic device implementing a radar-based contactless user interaction). In an autonomous robot application (e.g. a cleaning robot, a lawn mower robot, a drone), the radar target 10 may be a structure such as a wall or some obstacle whose presence and/or position may be relevant for a movement decision by the autonomous robot. In a surface scanning application the radar target 10 may be a surface of interest (e.g. a surface traversed by a robot). These examples of applications and radar targets are however merely non-limiting examples and many other types of applications and radar targets 10 are possible.

The radar device 100 comprises a transmitting antenna 112. The transmitter 110 is configured to transmit radar pulses Tx via the transmitting antenna 112. The transmitting antenna 112 may be coupled to an output port of the transmitter 110. The radar device 100 comprises a receiving antenna 122. The receiver 120 is configured to receive radar pulses Rx via the receiving antenna 122. The receiving antenna 122 may be coupled to an input port of the receiver 120. The antennas 120, 122 may be of a directional type, for instance a dipole antenna, a Yagi antenna or a phased array antenna. A reflector such as a horn reflector and/or a dielectric lens may be arranged in connection with the transmitter 110 and/or receiver 120 to, improve the directionality of the radar measurement. Although the illustrated embodiment employs separate antennas for transmitting and receiving radar pulses, it is also possible to use a common antenna for the transmitter 110 and the receiver 120. For example, a selector may be connected between the common antenna and the transmitter 110 and receiver 120, for selectively coupling either the transmitter 110 or the receiver 120 to the antenna.

The transmitter 110 comprises a radar pulse generator 114 configured to generate the radar pulses Tx, to be transmitted by the transmitter 110. The radar pulses / wavelets Tx may be radio-frequency pulses, e.g. UWB pulses with a pulse duration in a range of 50 ps to 10 ns and a carrier frequency in the mmWave band. The radar pulses Tx may by way of example have a bandwidth of about 7 GHz to about 14 GHz (e.g. measured at FWHM). Non-limiting examples of frequency bands within which the radar pulses Tx may include 57-71 GHz, 57-64 GHz or 77-81 GHz. While such pulses may enable high accuracy measurements in short range applications, the measurement approach disclosed herein is envisaged to have a more general applicability and thus be used in conjunction with radar pulses of higher or lower carrier frequencies and longer or shorter pulse durations.

The radar pulse generator 114 may be configured to generate each radar pulse Tx with a same waveform and magnitude, such that radar pulses Tx generated at temporally spaced measurement occasions may present phase-coherence with respect to each other. This enables obtaining phase-coherent radar reflection data and hence facilitates the time-diluted measurement approach to be further described below.

The receiver 120 comprises a reference pulse generator 124. The reference pulse generator 124 is configured to generate reference pulses Ref. The afore-mentioned properties of the transmitted radar pulses Tx may apply correspondingly to the reference pulses Ref generated by the wavelet generator 124. Accordingly, the reference pulses Ref may be radio-frequency pulses, e.g. UWB mmWave pulses. The reference pulse generator 124 may like the transmitter 110 be configured to generate each reference pulse Ref with a same waveform and magnitude, such that reference pulses Ref generated at temporally spaced measurement occasions may present mutual phase-coherence.

The radar pulses Tx and the reference pulses Ref may further be generated to present the same waveform and magnitude. In other words, the radar pulses Tx may be identical to the reference pulses Ref. This enables the receiver 120 to implement matched filter detection of received radar pulses Rx during operation, as will be further described below.

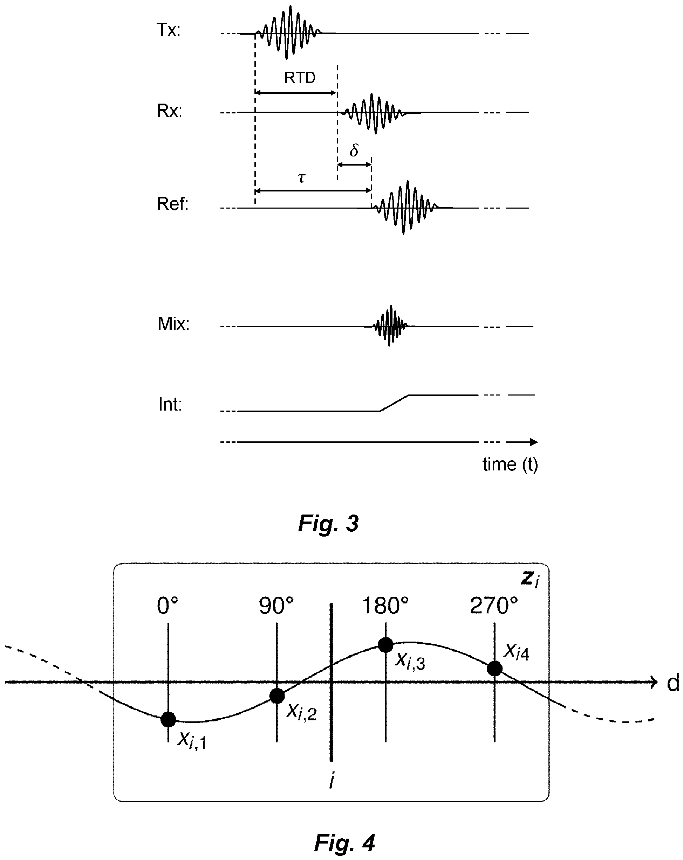

The pulse generators 114, 124 may be implemented in various manners. According to one example, the pulse generation may realized using a transceiver module as described in connection with Fig. 4 of the published PCT-application PCT/EP2011/058847 on page 11 lines 22-30. This implementation offers a low-complexity method for generating UWB mmWave radar and reference pulses with a well-defined and fixed initial phase, carrier frequency and duration. The pulse generation may however also be realized using other oscillator configurations, for example, by a pulse generator relying on negative differential conductance (e.g. provided by a cross-coupled differential pair) or positive feedback, where it is possible to start and quench the oscillations rapidly. Further example implementations include passing a continuous oscillation through a switchable amplifier, filtering of a baseband pulse, up-conversion of a baseband pulse, or using digital gates to create the desired waveform, as per se is known to the person skilled in the art.

In the illustrated embodiment the transmitter 110 and the receiver 120 comprises a respective pulse generator 114 and 124. The pulse generators 114 and 124 together define pulse generator circuitry of the radar device 100. Using different pulse generators for the transmitter 110 and the receiver 120 may be advantageous in that a timing of radar pulses Tx and reference pulses Ref conveniently may be controlled independently form one another, among others enabling Tx and Rx pulses to be generated with a temporal overlap. Moreover, timing control may be facilitated since delaying of the actual pulses (Tx and Ref) may be avoided, which may facilitate precise delay control. However, embodiments comprising pulse generator circuitry comprising a single pulse generator shared by the transmitter 110 and the receiver 120 are also possible. A single pulse generator embodiment may implement delay control by providing separate triggers to the pulse generator for generating the radar pulse Tx and the reference pulse Ref, and a switch for directing the respective pulses to the transmitter 110 or receiver 120. Alternatively, a single pulse may be generated and distributed into both a transmit branch and a reference branch. The transmit branch may provide the radar pulse Tx as input to the transmitter 110. The reference branch may comprise delay circuitry for delaying the received pulse so as to provide a reference pulse Ref delayed with respect to the radar pulse Tx, as input to the receiver 120. In either case of using a single pulse generator or separate pulse generators such as 114, 124, the radar device 100 may comprise pulse generator circuitry configured to generate the radar pulses Tx and the reference pulses Ref.

The receiver 120 comprises a mixer 126. The mixer 126 is configured to perform mixing of a pair of input signals and output a mixing product Mix thereof. A first input of the mixer 126 is coupled to the input port of the receiver 110 (coupled to the receiver antenna 122). A second input of the mixer 126 is coupled to an output of the reference pulse generator 124. Hence, in response to a received pulse Rx and a reference pulse Ref being applied to the mixer inputs with a temporal overlap, the mixer 126 may output the instantaneous mixing product (also a pulse) of the overlapping portions of the Rx and Ref pulses. Passive as well as active, balanced or unbalanced mixer implementations are possible, e.g. a Gilbert cell, a diode mixer or a passive field-effect transistor mixer.

The receiver 120 comprises an integrator 128. The integrator 128 is configured to integrate the mixing product Mix to output an integrated mixing product Int. An input of the integrator 128 is coupled to the output of the mixer 126. The mixing product Mix, which for overlapping Rx and Ref input pulses will be an AC signal, may hence be converted to a DC signal. The integrator 128 may be implemented by a capacitor, or an integrating OP-amp. In any case, it is to be understood that an integration time should be equal to or greater than a maximum expected duration of the (pulsed) mixing product Mix.

The radar device 100 comprises a signal processor 140. The signal processor 140 is configured to receive and process integrated mixing products Int output by the integrator 128. For the purpose of the following discussion, index $i$ is introduced to refer to a measurement set and index $j$ is introduced to refer to refer to a measurement of a measurement set. Hence, each measurement $j$ of a measurement set $i$ produces an integrated mixing product Int output by the integrator 128.

The signal processor 140 comprises an ADC 142. An input of the ADC 142 is coupled to the output of the integrator 128. The ADC 142 is configured to convert each integrated mixing product Int to a digital counterpart $x_{i,j}$, (subscript $i,j$ accordingly denoting measurement $j$ of measurement set $i$).

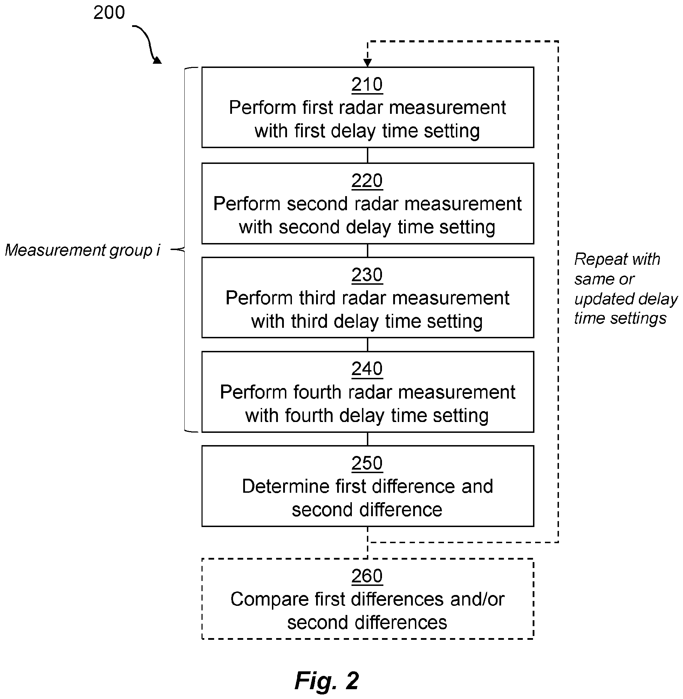

The signal processor 140 comprises a digital signal processor (DSP) 144. An input of the DSP 144 is coupled to an output of the ADC 142. The DSP 144 is configured to process the digital values Int_d. As will be further described in connection with Fig. 2, signal processor 140 / the DSP 144 may process integrated mixing products Int / digital values Int_d resulting from radar measurements to estimate amplitude and phase information in the form of I/Q components. The I/Q estimates may be stored in a memory of the DSP 144 for retrieval and/or further processing, and/or output to peripheral circuitry via a communication bus of the radar device 100. The DSP 144 may be implemented in dedicated circuitry, or in an application-specific integrated circuit (ASICs) or field-programmable gate arrays (FPGAs). However, the functionality of the DSP 144 may alternatively implemented by a microprocessor and a computer readable medium, such as a non-volatile memory, storing instructions implementing the processing operations.

Although not shown in Fig. 1, the radar device 100 may comprise additional circuitry for adapting (e.g. amplifying or attenuating) the integrated mixing product Int prior to the ADC 142 to optimize the signal level with respect to the dynamic range of the ADC 142.

The radar device 100 comprises a timing circuit 130. As may be understood from the following, the timing circuit 130 may facilitate timing control over the generation of radar pulses Tx and reference pulses Ref.

The timing circuit 130 is configured to output a first trigger Trig_tx to the radar pulse generator 114 for triggering generation of a radar pulse Tx. The timing circuit 130 is configured to output a second trigger Trig_ref to the reference pulse generator 124 for triggering generation of a reference pulse Ref. The timing circuit 130 is configured to output to the second trigger Trig_ref with a controllable / programmable delay after the first trigger Trig_tx. In other words, the timing circuit 130 may delay the output of the second trigger with respect to the output of the first trigger by a controllable delay time. The first and second triggers Trig_tx, Trig_ref may for example be formed by a rising edge or a falling edge of a (digital) pulse.

The radar pulse generator 114 is in turn configured to generate a radar pulse Tx in response to receiving the first trigger Trig_Tx. Correspondingly, the reference pulse generator 124 is configured to generate a reference pulse Ref in response to receiving the second trigger Trig_Ref.

In embodiments wherein a single pulse generator is shared by the transmitter 110 and the receiver 120 both the first and second triggers Trig_tx, Trig_ref may be output to the pulse generator circuitry.

In either case, a radar pulse Tx and a reference pulse Ref may be generated with a variable delay by setting the controllable delay of the timing circuit 130.

The timing circuit 130 may operate on basis of a reference clock, e.g. provided by a voltage-controlled oscillator (VCO) or some other conventional clock source of the radar device 100. The timing circuit 130 may comprise counter circuitry configured to output the first trigger Trig_tx and the second trigger Trig_ref after a respective number of clock edges. Higher precision delay control may be obtained by distributing the clock signal into a first path associated with the first trigger generation Trig_tx and a and a second path associated with the second trigger generation Trig_ref. A delay line (e.g. a tapped delay line or other digital or continuous delay circuit) may be provided in one of the first or second path to provide fine delay control between the respective clock signals propagating along the first and second paths. By way of example, state of the art delay circuits, such as tapped delay lines, may enable variable delay control with a resolution/step-size of about 0.5 ps or less. It is however also possible to use separate and synchronized clocks sources for controlling the generation of the first and second triggers Trig_tx, Trig_ref.

The operation of the radar device 100 will now be described with reference to Figs 2 and 3.

Fig. 2 is a flow-chart of a method 200 for performing radar measurements, implemented by the radar device 100. Fig. 3 is a schematic timing diagram of Fig. 3 illustrating a single radar measurement which forms a basis for the method 200.

A radar pulse Tx is generated by the pulse generator circuitry (e.g. by the radar pulse generator 114) and transmitted by the transmitter 110 towards the radar target 10. The radar pulse Tx is, after being reflected off the radar target 10, received by the receiver 120 as a received radar pulse Rx. In particular, the receiver 120 may receive a signal comprising a reflection of the radar pulse Tx, as a received signal, the reflection being the received radar pulse Rx. The mixer 126 mixes the received radar pulse Rx with a reference pulse Ref generated by the pulse generator circuitry (e.g. by the reference pulse generator 124), to obtain a mixing product Mix. The mixing product Mix is integrated by the integrator 128 to obtain an integrated mixing product Int.

As discussed above, the radar device 100 may generate the reference pulse Ref with a variable delay time ($\tau$) with respect to the radar pulse Tx. The temporal alignment / timing offset ($\delta$) between the received radar pulse Rx and the reference pulse Ref at the mixer 126 is accordingly a function of the round-trip delay (RTD) of the radar pulse Tx and the delay time $\tau$. As may be appreciated, the RTD depends on the distance to the radar target 10. Under the constraint that the RTD does not change, an instantaneous phase relationship between the received radar pulse Rx and the reference pulse Ref during mixing and hence the instantaneous mixing product Mix may accordingly be varied deterministically between successive radar measurements by varying the delay time $\tau$. The integrated mixing product Int or the digital counterpart $x_{i,j}$ of each radar measurement thus corresponds to a value or sample of a cross-correlation between the received radar pulse Rx and the reference pulse Ref (e.g. as a function of $\tau$).

Accordingly, with reference to Fig. 2 the method 200 comprises performing a group or set of measurements (e.g. a first group or set of measurements $i = 1$) defined by a first radar measurement ($j = 1$, step 210), a second radar measurement ($j = 2$, step 220), a third radar measurement ($j = 3$, step 230) and a fourth radar measurement ($j = 4$, step 240), with a respective delay $\tau_{i,j=1\ldots4}$ set to a first delay time ($\tau_{i,1}$), a second delay time ($\tau_{i,2} > \tau_{i,1}$), a third delay time ($\tau_{i,3} > \tau_{i,2}$), and a fourth delay time ($\tau_{i,4} > \tau_{i,3}$). The delay times $\tau_{i,j=1\ldots4}$ are set to correspond to sampling positions with a quarter wavelength spacing. The radar measurement may be performed in the stated order but may also be performed out of sequence. In any case, it may be advantageous to perform the radar measurements consecutive to one another, to reduce a risk of a changed RTD for the radar pulses Tx between the four measurements.

In each of the first through fourth measurements, the received radar pulse Rx and the reference pulse Ref arrive at the mixer 126 which outputs a mixing product Mix. As discussed above, for identical transmitted radar pulses Tx and reference pulses Ref, the mixing product Mix corresponds to the filtered pulse output by a matched filter. Although a matched filter implementation may provide improved signal-to-noise performance, it is in principle possible to obtain representative measurements also using reference pulses Ref not matching the radar pulses Tx, e.g. reference pulses Ref and radar pulses Tx with different envelopes but with matching carrier/center frequency.

The mixing product / filtered pulse is integrated by the integrator 128 which outputs the integrated mixing product Int.

The integrated mixing product Int is received by the signal processor 140 and converted into a corresponding digital sample $x_{i,j=1\ldots4}$ by the ADC 142 which is output to the DSP 144.

In response to receiving each one of the samples $x_{i,j=1\ldots4}$ the DSP 144 calculates a first value $I = x_{i,1} - x_{i,3}$ and a second value $Q = x_{i,2} - x_{i,4}$. In other words, the signal processor 140 (step 250) determines a first value $I$ and a second value $Q$ representing a difference between the integrated mixing product Int of the first and third radar measurements ($j = 1,3$) and a difference between the integrated mixing product Int of the second and fourth radar measurements ($j = 2,4$). The first and second values $I, Q$ form estimates of an in-phase and a quadrature component, respectively, for the received radar pulses Rx of the first through fourth radar measurements.

To facilitate understanding of this approach, reference is made to Fig. 4 which conceptually illustrates four (cross-correlation) samples $x_{i,j=1\ldots4}$ acquired in a group of radar measurements $i$. To illustrate the quarter wavelength spacing of the sampling locations in acquisition space (defined by the delay times $\tau_{i,j=1\ldots4}$) the samples are shown on top of a sinusoidal waveform representing a portion of a received radar pulse Rx with carrier frequency $f_c$. The portion of the received radar pulse is shown with an envelope of constant amplitude and carrier with constant phase, which is contemplated to be a reasonable approximation for a single period / wavelength of the radar pulse. The sampling locations of a group of radar measurement $i$ may be considered as a corresponding cluster (in space), distributed around the cluster center (given by the average of the sampling locations, or equivalently, the delay times of the group). The signal processor 140 / DSP 144 transforms the four samples $x_{i,j=1\ldots4}$ of the group / cluster $i$ into a complex number $z_i$:

$$z_i = \underbrace{(x_{i,1} - x_{i,3})}_{in-phase\ (I)} + i\ \underbrace{(x_{i,2} - x_{i,4})}_{quadrature\ (Q)}$$

representing an in-phase component $I$ and a quadrature component $Q$ for the cluster $i$. The signal processor 140 / DSP 144 may accordingly determine one I/Q pair for each cluster $i$.

Although the subtraction according to the present embodiment is performed by the signal processor 140 in the digital domain, it is in other embodiments also possible to perform the subtraction in analogue domain (e.g. by supplying integrated mixing products to an analog subtractor) to obtain a pair of analog difference signals, which subsequently may be converted to digital counterparts I and Q by an ADC.

As may be appreciated from the above, the cross-correlation or the received pulse is not sampled in a single measurement but rather in a time-diluted fashion, i.e. distributed over a plurality of measurements, more specifically four measurements. A direct sampling approach would require a sampling rate at a multiple of the carrier frequency of the received pulse, which may not be possible or at least impractical for short wavelengths (e.g. in the mmWave band), e.g. due to the entailing bandwidth requirements on the ADC. This may be a particular challenge in low power applications. According to a time-diluted approach, the rate at which samples of the cross-correlation are obtained is however not dictated by the carrier frequency of the radar pulses. In a sense, the sampling rate in a time-diluted approach corresponds to the rate of performing the measurements (which even may vary). In practice, the measurement rate in a time-diluted approach may correspond to roughly the pulse repetition frequency (PRF) of the radar transmitter 110.

Meanwhile, the timing-resolution of the sampled cross-correlation depends on the step size of the delay time $\tau$ between the measurements. Hence, I/Q modulation based on samples spanning the full width of the radar pulse may require a considerable number of measurements. In addition to implying an increased overall measurement time this translates into a corresponding amount of data to store and process. This may become an increasing issue for shorter wavelengths. The method and radar device disclosed herein however allows these challenges to be overcome, by combining four radar measurements with a quarter wavelength spacing with two simple subtractions.

It is in the above discussion assumed that the measurement conditions, in particular the RTD, for the radar pulses Tx do not change between the four measurements $j = 1\ldots4$ forming a measurement group $i$. As the radar device 100 may generate and transmit the radar pulses Tx as identical pulses, also the received radar pulses Rx of the first through fourth measurements $j$ = 1...4 may be identical (i.e. have a same waveform and magnitude). This may be ensured by performing the four measurements during a time interval which is short compared to the dynamics of the measurement conditions (e.g. a speed of the radar target 10 relative the radar device 100).

The method 200 does however not preclude that measurement conditions change between successive groups of radar measurements. Referring again to Fig. 2, a further group of radar measurements $i + 1$ comprising four radar measurements 210, 220, 230, 240 may be performed, either with a same set of delay time settings ($\tau_{i+1,j} = \tau_{i,j}$ for $j$ = 1... 4) as in the previous set of measurements, or with an updated set of delay time settings ($\tau_{i+1,j} = \tau_{i,j} + \Delta_{i+1}$ for $j$ = 1... 4), where $\Delta_{i+1}$ is a predetermined or configurable delay time offset (corresponding to a distance in space / spacing between the cluster centers $i$ and $i + 1$).

Performing two or more groups or radar measurements with a same set of delay time settings allows detecting a changed radar response. The DSP 144 may compare $I$ estimates and/or $Q$ estimates obtained from successive groups of measurements (step 260). The DSP 144 may apply a fast Fourier transform (FFT) to a number N of groups of measurements (e.g. 16-512) to estimate the Doppler response from the radar target 10. This may be used for e.g. velocity estimation and gesture detection.

Performing two or more groups or radar measurements with different sets of delay time settings allows acquiring radar responses at two or more measurement distances. In the "cluster-terminology" presented above this could be referred to as performing a plurality of groups of radar measurements at respective cluster centres (i.e. located at different distances from the radar device 100) distributed throughout a measurement distance range (or shorter measurement range). As may be appreciated, such a plurality of groups or radar measurements may be referred to as a "sweep" throughout the measurement distance range. The cluster centres may be equidistantly distributed (implying equal settings of $\Delta_{i+1}$ for all measurements $i$) or non-uniformly distributed (e.g. $\Delta_{i+1}$ may vary between successive measurements). A spacing of the groups / cluster centers (i.e. an intragroup spacing) of the sweep may exceed a spacing of the sampling locations within the groups (i.e. inter-group spacing). The inter-group spacing is as discussed above a quarter of a wavelength of the radar pulses Tx. Meanwhile, an intra-group spacing may exceed a quarter of a wavelength of the radar pulses Tx. For example, an intragroup spacing may correspond to 10-100 wavelengths / periods of the radar pulses Tx.

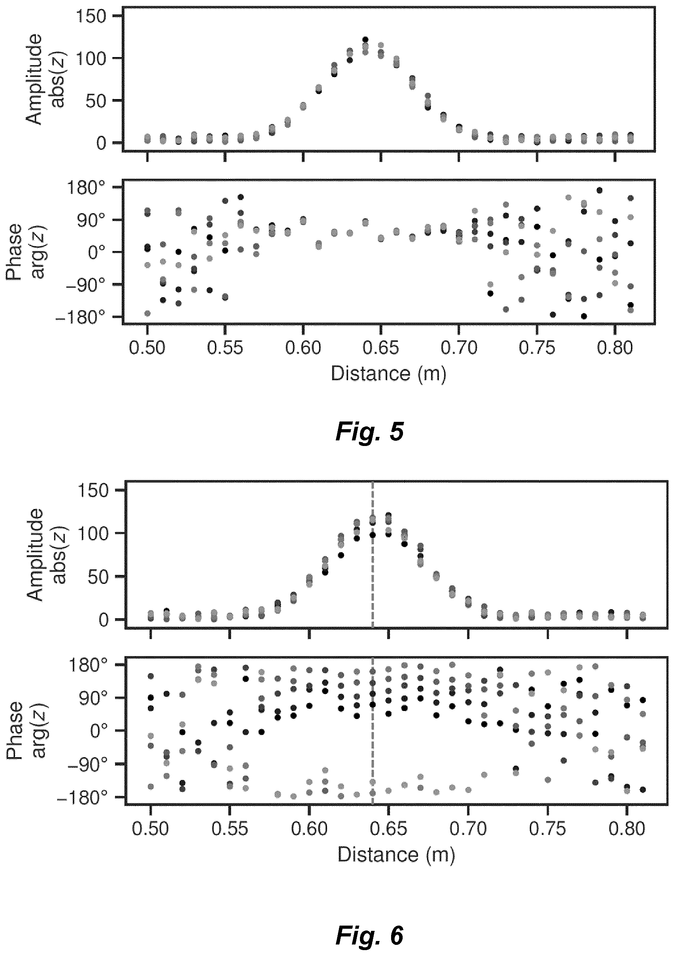

Fig. 5 illustrates example amplitudes (top) and phases (bottom) obtained from a number of successive pluralities of groups or radar measurements (i.e.

"sweeps") towards a static radar target (e.g. 6 sweeps). The different shades of the dots indicate the respective sweeps. The distance to the radar target in each sweep may be identified as the position of the peak of the amplitudes as a function of measurement distance (e.g. about 0.64 m in the present example). The small discrepancies in target distance between the sweeps may be attributed to random errors. The results of the sweeps may be averaged in the complex plane to increase signal-to-noise ratio (SNR).

Fig. 6 illustrate a similar example for a radar target moving between the successive sweeps. The sweeps produce peaks with roughly the same amplitude (top), but the phase is changing (bottom). By comparing the phase along a slice of the $I, Q$ data (dashed vertical line indicated in top graph of Fig. 6) it may be determined that the phase changed by about 210 degrees between the sweeps. Assuming that a full phase rotation of 360 degrees translates to half of the wavelength of the radar pulses Tx (at carrier frequency) a velocity of the radar target may be estimated by taking into account the time between the sweeps (which is a known parameter).

According to a further measurement approach, a first sweep spanning a first wide distance range may be combined with a second sweep spanning a second narrow distance range. The narrow distance range may be a sub-range of the wider distance range. By configuring the first sweep with a greater group spacing (intragroup spacing) and the second sweep with a smaller group spacing a first coarse scan may be performed in the wider distance range and followed by a second finer scan in the more narrow distance range. This may be used to alternatingly perform a coarse scan of a wider distance range (e.g. to quickly detect obstacles at far distance from the radar device) and a finer scan of a narrow distance range (e.g. to allow more precise estimation of radar target distance and/or velocity closer to the radar device).

The second groups of measurements / sweep may be configured responsive to the first group of measurements / sweep. A first distance to the radar target may be estimated based on the first and second values $I, Q$ determined for each cluster / group of a first sweep. The delay times $\tau_{i,j=1...4}$ of a second sweep may thereafter be configured / determined such that a distance range covered by the second sweep includes estimated first distance. The first distance may e.g. be estimated by finding the position of the peak of the absolute values of the first and second values $I, Q$ for each cluster (see e.g. Fig. 5). The second sweep may then be performed and a second distance to the radar target may be estimated based $I, Q$ determined for each cluster / group of the second sweep.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A method for performing radar measurements, the method comprising:

    performing first, second, third and fourth radar measurements, each radar measurement comprising:

    generating a respective radar pulse,
    transmitting the respective radar pulse towards a radar target,
    generating a respective reference pulse,
    receiving a signal comprising a reflection of the respective radar pulse from the radar target, as a respective received signal,
    mixing the respective received signal with the respective reference pulse to obtain a respective mixing product, and
    integrating the respective mixing product to obtain a respective integrated mixing product;

    wherein, in the first, second, third and fourth radar measurements, generating the respective reference pulse is delayed with respect to generating the respective radar pulse by a first, second, third and fourth delay time, respectively, wherein a difference between the second and first delay time, between the third and second delay time, and between the fourth and third delay time, each corresponds to a quarter of a wavelength of the radar pulses;
    and the method further comprising determining a first value representing a difference between the respective integrated mixing product of the first and third radar measurements, and a second value representing a difference between the respective integrated mixing product of the second and fourth radar measurements, wherein the first value is an estimate of an in-phase component I and the second value is an estimate of a quadrature component Q.

2. A method according to claim 1, wherein the first, second, third and fourth radar measurement each further comprise converting the respective integrated mixing product to a digital value, wherein a first, second, third and fourth digital value is obtained, and wherein determining the first value comprises calculating a difference between the first and third digital value, and determining the second value comprises calculating a difference between the second and fourth digital value.

3. A method according to any one of the preceding claims, wherein the respective radar pulses of the radar measurements have a same waveform and magnitude, and wherein the respective reference pulses have a same waveform and magnitude.

4. A method according to any one of the preceding claims, wherein mixing the respective received signal with the respective reference pulse comprises filtering the respective received signal using a matched filter, wherein in the first, second, third and fourth radar measurements, a respective delay of the matched filter is set to the first, second, third and fourth delay time.

5. A method according to any one of the preceding claims, wherein the radar and reference pulses have a carrier frequency in the mmWave band.

6. A method according to any one of the preceding claims, wherein the radar and reference pulses are ultra-wideband pulses.

7. A method according to any one of the preceding claims, wherein the first, second, third and fourth radar measurements form a group of consecutive radar measurements.

8. A method according to any one of the preceding claims, wherein the first, second, third and fourth radar measurements form a first group of measurements and the method further comprises:

    performing a second group of measurements comprising first, second, third and fourth radar measurements with a first, second, third and fourth delay time, respectively, between generating the radar pulse and the reference pulse, such that a difference between the second and first delay time, between the third and second delay time, and between the fourth and third delay time, each corresponds to a quarter of a wavelength of the radar pulses; and
    determining a first value representing a difference between the integrated mixing product of the first and third radar measurements of the second group of measurements, and a second value representing a difference between the integrated mixing product of the second and fourth radar measurements of the second group of measurements, wherein the first value determined for the second group of measurements is an estimate of an in-phase component I and the second value determined for the second group of measurements is an estimate of a quadrature component Q.

9. A method according to claim 8, wherein the respective first, second, third and fourth delay times of the first and second groups of radar measurements are equal and the method further comprises comparing the first values and/or the second values based on the first and second groups of measurements.

10. A method according to claim 8, wherein the first, second, third and fourth delay times of the second group of radar measurements differ from the first, second, third and fourth delay times of the first group of radar measurements.

11. A method according to claim 10, wherein a spacing in terms of measurement distance between the first and second groups of measurements exceeds a quarter of a wavelength of the radar pulses.

12. A method according to any one of claims 1-7, comprising performing a first plurality of groups of measurements, and subsequently performing a second plurality of groups of measurements,

wherein each first and second group of measurements comprises performing first, second, third and fourth radar measurements with a first, second, third and fourth delay time, respectively, between generating the radar pulse and the reference pulse, such that a difference between the second and first delay time, between the third and second delay time, and between the fourth and third delay time, each corresponds to a quarter of a wavelength of the radar pulses, and the method further comprising, determining, for each first and second group of measurements, a first value representing a difference between an integrated mixing product of the first and third radar measurements of the group of measurements, and a second value representing a difference between an integrated mixing product of the second and fourth radar measurements of the group of measurements, wherein the first value and the second value determined for each group of measurements is an estimate of an in-phase component I and an estimate of a quadrature component Q, respectively, for the group;
wherein the first plurality of groups of measurements span a first range of measurement distances and the second plurality of groups of measurements span a second range of measurement distances, forming a sub-range of the first range, and
wherein a spacing in terms of measurement distance between consecutive first groups of measurements exceeds a spacing in terms of measurement distance between consecutive second groups of measurements.

13. A method according to claim 12, further comprising:

estimating a first distance to the radar target based on the first and second values determined for each first group of measurements;
thereafter determining the first, second, third and fourth delay times for each second group of measurements such that said first distance lies within the second distance range; and
estimating a second distance to the radar target based on the first and second values determined for each second group of measurements.

14. A radar device (100) comprising:

a transmitter (110), a receiver (120) and pulse generator circuitry (114, 124);
wherein the radar device is configured to perform first, second third and fourth radar measurements, each radar measurement comprising:

generating by the pulse generator circuitry (114) a respective radar pulse,
transmitting by the transmitter the respective radar pulse towards a radar target,
generating by the pulse generator circuitry (124) a respective reference pulse, and
by the receiver: receiving a signal comprising a reflection of the respective radar pulse from the radar target, as a respective received signal, mixing the respective received signal with the respective reference pulse to obtain a respective mixing product, and integrating the respective mixing product to obtain a respective integrated mixing product;

wherein, in the first, second, third and fourth radar measurements, the pulse generator circuitry generates the respective reference pulse with a delay with respect to the respective radar pulse set to a first, second, third and fourth delay time, respectively, wherein a difference between the second and first delay time, between the third and second delay time, and between the fourth and third delay time, each corresponds to a quarter of a wavelength of the radar pulses; and the radar device further comprising a signal processor (140) configured to determine a first value representing a difference between the respective integrated mixing product of the first and third radar measurements, and a second value representing a difference between the respective integrated mixing product of the second and fourth radar measurements, wherein the first value is an estimate of an in-phase component I and the second value is an estimate of a quadrature component Q.

15. A radar device according to claim 14, further comprising an analog-to-digital converter (142), wherein the first, second, third and fourth radar measurement each further comprise converting, by the analog-to-digital converter, the respective integrated mixing product to a digital value, wherein a first, second, third and fourth digital value is obtained, and wherein the processing circuit is configured to determine the first value by calculating a difference between the first and third digital value, and the second value by calculating a difference between the second and fourth digital value.

**Patentansprüche**

1. Verfahren zum Durchführen von Radarmessungen, wobei das Verfahren umfasst:
   Durchführen einer ersten, einer zweiten, einer dritten und einer vierten Radarmessung, wobei jede Radarmessung umfasst:

   Generieren eines jeweiligen Radarpulses,
   Aussenden des jeweiligen Radarpulses in Richtung eines Radarziels,
   Generieren eines entsprechenden Referenzpulses,
   Empfangen eines Signals, das eine Reflexion des jeweiligen Radarpulses vom Radarziel umfasst, als ein jeweiliges Empfangssignal,
   Mischen des jeweiligen Empfangssignals mit dem entsprechenden Referenzpuls, um ein jeweiliges Mischprodukt zu erlangen, und
   Integrieren des jeweiligen Mischprodukts, um ein jeweiliges integriertes Mischprodukt zu erlangen,
   wobei bei der ersten, der zweiten, der dritten und der vierten Radarmessung das Generieren des entsprechenden Referenzpulses in Bezug auf das Generieren des jeweiligen Radarpulses jeweils um eine erste, eine zweite, eine dritte bzw. eine vierte Verzögerungszeit verzögert ist,
   wobei ein Unterschied zwischen der zweiten und der ersten Verzögerungszeit, zwischen der dritten und der zweiten Verzögerungszeit, und zwischen der vierten und der dritten Verzögerungszeit jeweils einem Viertel einer Wellenlänge der Radarpulse entspricht,
   und das Verfahren ferner ein Bestimmen eines ersten Wertes, der einen Unterschied zwischen dem jeweiligen integrierten Mischprodukt der ersten und der dritten Radarmessung repräsentiert, und eines zweiten Wertes, der einen Unterschied zwischen dem jeweiligen integrierten Mischprodukt der zweiten und der vierten Radarmessung repräsentiert, umfasst, wobei der erste Wert eine Schätzung einer In-Phase-Komponente I ist und der zweite Wert eine Schätzung einer Quadraturkomponente Q ist.

2. Verfahren nach Anspruch 1, wobei die erste, die zweite, die dritte und die vierte Radarmessung ferner jeweils ein Umwandeln des jeweiligen integrierten Mischprodukts in einen Digitalwert umfasst, wobei ein erster, ein zweiter, ein dritter und ein vierter Digitalwert erlangt werden, und wobei das Bestimmen des ersten Wertes ein Berechnen eines Unterschieds zwischen dem ersten und dem dritten Digitalwert umfasst, und das Bestimmen des zweiten Wertes ein Berechnen eines Unterschieds zwischen dem zweiten und dem vierten Digitalwert umfasst.

3. Verfahren nach einem der vorhergehenden Ansprüche, wobei die jeweiligen Radarpulse der Radarmessungen eine gleiche Wellenform und Stärke aufweisen, und wobei die entsprechenden Referenzpulse eine gleiche Wellenform und Stärke aufweisen.

4. Verfahren nach einem der vorhergehenden Ansprüche, wobei das Mischen des jeweiligen Empfangssignals mit dem entsprechenden Referenzpuls ein Filtern des jeweiligen Empfangssignals unter Verwendung eines angepassten Filters umfasst, wobei bei der ersten, der zweiten, der dritten und der vierten Radarmessung eine jeweilige Verzögerung des angepassten Filters auf die erste, die zweite, die dritte und die vierte Verzögerungszeit eingestellt wird.

5. Verfahren nach einem der vorhergehenden Ansprüche, wobei die Radar- und Referenzpulse eine Trägerfrequenz im mmWave-Band aufweisen.

6. Verfahren nach einem der vorhergehenden Ansprüche, wobei die Radar- und Referenzpulse Ultrabreitbandpulse sind.

7. Verfahren nach einem der vorhergehenden Ansprüche, wobei die erste, die zweite, die dritte und die vierte Radarmessung eine Gruppe von aufeinanderfolgenden Radarmessungen bilden.

8. Verfahren nach einem der vorhergehenden Ansprüche, wobei die erste, die zweite, die dritte und die vierte Radarmessung eine erste Gruppe von Messungen bilden und das Verfahren ferner umfasst:

   Durchführen einer zweiten Gruppe von Messungen, die eine erste, eine zweite, eine dritte und eine vierte Radarmessung umfasst, mit jeweils einer ersten, einer zweiten, einer dritten bzw. einer vierten Verzögerungszeit zwischen einem Generieren des Radarpulses und des Referenzpulses, so dass ein Unterschied zwischen der zweiten und der ersten Verzögerungszeit, zwischen der dritten und der zweiten Verzögerungszeit, und zwischen der vierten und der dritten Verzögerungszeit jeweils einem Viertel einer Wellenlänge der Radarpulse entspricht, und Bestimmen eines ersten Wertes, der einen Unterschied zwischen dem integrierten Mischprodukt der ersten und der dritten Radarmessung der zweiten Gruppe von Messungen repräsentiert, und eines zweiten Wertes, der einen Unterschied zwischen dem integrierten Mischprodukt der zweiten und der vierten Radarmessung der zweiten Gruppe von Messungen repräsentiert, wobei der für die zweite Gruppe von Messungen bestimmte erste Wert eine Schätzung einer In-Phase-Komponente I ist und der für die zweite Gruppe von Messungen bestimmte zweite Wert eine Schätzung einer Quadraturkomponente Q ist.

9. Verfahren nach Anspruch 8, wobei die jeweiligen ersten, zweiten, dritten bzw. vierten Verzögerungszeiten der ersten und der zweiten Gruppe von Radarmessungen gleich sind, und das Verfahren ferner ein Vergleichen der ersten und/oder der zweiten Werte auf der Grundlage der ersten und der zweiten Gruppe von Messungen umfasst.

10. Verfahren nach Anspruch 8, wobei die erste, die zweite, die dritte und die vierte Verzögerungszeit der zweiten Gruppe von Radarmessungen unterschiedlich von der ersten, der zweiten, der dritten und der vierten Verzögerungszeit der ersten Gruppe von Radarmessungen sind.

11. Verfahren nach Anspruch 10, wobei ein Abstand hinsichtlich einer Messdistanz zwischen der ersten und der zweiten Gruppe von Messungen ein Viertel einer Wellenlänge der Radarpulse übersteigt.

12. Verfahren nach einem der Ansprüche 1 bis 7, das ein Durchführen einer ersten Mehrzahl von Gruppen von Messungen und ein anschließendes Durchführen einer zweiten Mehrzahl von Gruppen von Messungen umfasst,

wobei jede erste und zweite Gruppe von Messungen ein Durchführen einer ersten, einer zweiten, einer dritten und einer vierten Radarmessung mit jeweils einer ersten, einer zweiten, einer dritten bzw. einer vierten Verzögerungszeit zwischen einem Generieren des Radarpulses und des Referenzpulses umfasst, so dass ein Unterschied zwischen der zweiten und der ersten Verzögerungszeit, zwischen der dritten und der zweiten Verzögerungszeit, und zwischen der vierten und der dritten Verzögerungszeit jeweils einem Viertel einer Wellenlänge der Radarpulse entspricht,
und das Verfahren ferner ein Bestimmen, für jede erste und zweite Gruppe von Messungen, eines ersten Wertes, der einen Unterschied zwischen einem integrierten Mischprodukt der ersten und der dritten Radarmessung der Gruppe von Messungen repräsentiert, und eines zweiten Wertes, der einen Unterschied zwischen einem integrierten Mischprodukt der zweiten und der vierten Radarmessung der Gruppe von Messungen repräsentiert, umfasst, wobei der erste Wert und der zweite Wert, die für jede Gruppe von Messungen bestimmt werden, jeweils eine Schätzung einer In-Phase-Komponente I bzw. eine Schätzung einer Quadraturkomponente Q für die Gruppe sind, wobei die erste Mehrzahl von Gruppen von Messungen einen ersten Bereich von Messdistanzen umspannt und die zweite Mehrzahl von Gruppen von Messungen einen zweiten Bereich von Messdistanzen, der einen Unterbereich des ersten Bereichs bildet, umspannt, und wobei ein Abstand hinsichtlich einer Messdistanz zwischen aufeinanderfolgenden ersten Gruppen von Messungen einen Abstand hinsichtlich einer Messdistanz zwischen aufeinanderfolgenden zweiten Gruppen von Messungen übersteigt.

13. Verfahren nach Anspruch 12, ferner umfassend:

Schätzen einer ersten Distanz zum Radarziel auf der Grundlage der ersten und der zweiten Werte, die für jede erste Gruppe von Messungen bestimmt werden,
anschließendes Bestimmen der ersten, der zweiten und der vierten Verzögerungszeiten für jede zweite Gruppe von Messungen, so dass die erste Distanz innerhalb des zweiten Distanzbereichs liegt, und
Schätzen einer zweiten Distanz zum Radarziel auf der Grundlage der ersten und der zweiten Werte, die für jede zweite Gruppe von Messungen bestimmt werden.

14. Radarvorrichtung (100), umfassend:

einen Sender (110), einen Empfänger (120) und eine Pulsgeneratorschaltung (114, 124),
wobei die Radarvorrichtung zum Durchführen einer ersten, einer zweiten, einer dritten und einer vierten Radarmessung ausgelegt ist, wobei jede Radarmessung umfasst:

Generieren, durch die Pulsgeneratorschaltung (114), eines jeweiligen Radarpulses,
Aussenden, durch den Sender, des jeweiligen Radarpulses in Richtung eines Radarziels,

Generieren, durch die Pulsgeneratorschaltung (124), eines entsprechenden Referenzpulses, und

durch den Empfänger: Empfangen eines Signals, das eine Reflexion des jeweiligen Radarpulses vom Radarziel umfasst, als ein jeweiliges Empfangssignal, Mischen des jeweiligen Empfangssignals mit dem entsprechenden Referenzpuls, um ein jeweiliges Mischprodukt zu erlangen, und Integrieren des jeweiligen Mischprodukts, um ein jeweiliges integriertes Mischprodukt zu erlangen,

wobei bei der ersten, der zweiten, der dritten und der vierten Radarmessung die Pulsgeneratorschaltung den entsprechenden Referenzpuls mit einer Verzögerung in Bezug auf den jeweiligen Radarpuls generiert, die jeweils auf eine erste, eine zweite, eine dritte bzw. eine vierte Verzögerungszeit eingestellt ist, wobei ein Unterschied zwischen der zweiten und der ersten Verzögerungszeit, zwischen der dritten und der zweiten Verzögerungszeit, und zwischen der vierten und der dritten Verzögerungszeit jeweils einem Viertel einer Wellenlänge der Radarpulse entspricht, und

wobei die Radarvorrichtung ferner einen Signalprozessor (140) umfasst, der zum Bestimmen eines ersten Wertes, der einen Unterschied zwischen dem jeweiligen integrierten Mischprodukt der ersten und der dritten Radarmessung repräsentiert, und eines zweiten Wertes, der einen Unterschied zwischen dem jeweiligen integrierten Mischprodukt der zweiten und der vierten Radarmessung repräsentiert, ausgelegt ist, wobei der erste Wert eine Schätzung einer In-Phase-Komponente I ist und der zweite Wert eine Schätzung einer Quadraturkomponente Q ist.

15. Radarvorrichtung nach Anspruch 14, die ferner einen Analog-Digital-Wandler (142) umfasst, wobei die erste, die zweite, die dritte und die vierte Radarmessung ferner jeweils ein Umwandeln, durch den Analog-Digital-Wandler, des jeweiligen integrierten Mischproduktes in einen Digitalwert umfasst, wobei ein erster, ein zweiter, ein dritter und ein vierter Digitalwert erlangt werden, und

wobei die Verarbeitungsschaltung dazu ausgelegt ist, den ersten Wert durch Berechnen eines Unterschieds zwischen dem ersten und dem dritten Digitalwert, und den zweiten Wert durch Berechnen eines Unterschieds zwischen dem zweiten und dem vierten Digitalwert zu bestimmen.

## Revendications

1. Procédé pour effectuer des mesures radar, le procédé comprenant de :

   effectuer des première, deuxième, troisième et quatrième mesures radar, chaque mesure radar comprenant de :

   générer une impulsion radar respective,
   transmettre l'impulsion radar respective vers une cible radar,
   générer une impulsion de référence respective,
   recevoir un signal comprenant une réflexion de l'impulsion radar respective depuis la cible radar, en tant que signal reçu respectif,
   mélanger le signal reçu respectif avec l'impulsion de référence respective pour obtenir un produit de mélange respectif, et
   intégrer le produit de mélange respectif pour obtenir un produit de mélange intégré respectif ;
   dans lequel, dans les première, deuxième, troisième et quatrième mesures radar, la génération de l'impulsion de référence respective est retardée par rapport à la génération de l'impulsion radar respective d'un premier, deuxième, troisième et quatrième temps de retard, respectivement, une différence entre le deuxième et le premier temps de retard, entre le troisième et le deuxième temps de retard, et entre le quatrième et le troisième temps de retard, chacun correspond à un quart de longueur d'onde des impulsions radar ;
   et le procédé comprenant en outre la détermination d'une première valeur représentant une différence entre le produit de mélange intégré respectif des première et troisième mesures radar, et une deuxième valeur représentant une différence entre le produit de mélange intégré respectif de la deuxième et quatrième mesures radar, dans lequel la première valeur est une estimation d'une composante en phase I et la deuxième valeur est une estimation d'une composante en quadrature Q.

2. Procédé selon la revendication 1, dans lequel les première, deuxième, troisième et quatrième mesures radar comprennent chacune en outre la conversion du produit de mélange intégré respectif en une valeur numérique, dans lequel une première, deuxième, troisième et quatrième valeur numérique est obtenue, et dans lequel la détermination de la première valeur comprend le calcul d'une différence entre la première et la troisième valeur numérique, et la détermination de la deuxième valeur comprend le calcul d'une différence entre la deuxième et la quatrième valeur numérique.

3. Procédé selon une quelconque des revendications précédentes, dans lequel les impulsions radar respectives des mesures radar ont une même forme d'onde et une même amplitude, et dans lequel les impulsions de référence respectives ont une même forme d'onde et une même amplitude.

4. Procédé selon une quelconque des revendications précédentes, dans lequel le mélange du signal reçu respectif avec l'impulsion de référence respective comprend le filtrage du signal reçu respectif à l'aide d'un filtre adapté, dans lequel dans les première, deuxième, troisième et quatrième mesures radar, un retard respectif du filtre adapté est réglé sur le premier, le deuxième, le troisième et le quatrième temps de retard.

5. Procédé selon une quelconque des revendications précédentes, dans lequel les impulsions radar et de référence ont une fréquence porteuse dans la bande mmWave.

6. Procédé selon une quelconque des revendications précédentes, dans lequel les impulsions radar et de référence sont des impulsions ultra-large bande.

7. Procédé selon une quelconque des revendications précédentes, dans lequel les première, deuxième, troisième et quatrième mesures radar forment un groupe de mesures radar consécutives.

8. Procédé selon une quelconque des revendications précédentes, dans lequel la première, deuxième, troisième et quatrième mesures radar forment un premier groupe de mesures et le procédé comprend en outre de :

    effectuer un deuxième groupe de mesures comprenant des première, deuxième, troisième et quatrième mesures radar avec un premier, deuxième, troisième et quatrième temps de retard, respectivement, entre la génération de l'impulsion radar et l'impulsion de référence, telle qu'une différence entre le deuxième et le premier temps de retard, entre le troisième et le deuxième temps de retard, et entre le quatrième et le troisième temps de retard, correspond chacune à un quart de longueur d'onde des impulsions radar ; et
    déterminer une première valeur représentant une différence entre le produit de mélange intégré des première et troisième mesures radar du deuxième groupe de mesures, et une deuxième valeur représentant une différence entre le produit de mélange intégré des deuxième et quatrième mesures radar du deuxième groupe de mesures, dans lequel la première valeur déterminée pour le deuxième groupe de mesures est une estimation d'une composante en phase I et la deuxième valeur déterminée pour le deuxième groupe de mesures est une estimation d'une composante en quadrature Q.

9. Procédé selon la revendication 8, dans lequel les premier, deuxième, troisième et quatrième temps de retard respectifs du premier et deuxième groupe de mesures radar sont égales et le procédé comprend en outre la comparaison des premières valeurs et/ou des deuxièmes valeurs sur la base des premier et deuxième groupes de mesures.

10. Procédé selon la revendication 8, dans lequel les premier, deuxième, troisième et quatrième temps de retard du deuxième groupe de mesures radar diffèrent du premier, deuxième, troisième et quatrième temps de retard du premier groupe de mesures radar.

11. Procédé selon la revendication 10, dans lequel un espacement en termes de la distance de mesure entre les premier et deuxième groupes de mesures dépasse le quart de longueur d'onde des impulsions radar.

12. Procédé selon une quelconque des revendications 1 à 7, comprenant l'exécution d'une première pluralité de groupes de mesures, puis l'exécution d'une deuxième pluralité de groupes de mesures,

    dans lequel chaque premier et deuxième groupe de mesures comprennent d'effectuer des première, deuxième, troisième et quatrième mesures radar avec un premier, deuxième, troisième et quatrième temps de retard, respectivement, entre la génération de l'impulsion radar et l'impulsion de référence, de telle sorte qu'une différence entre le deuxième et un premier temps de retard, entre le troisième et le deuxième temps de retard, et entre le quatrième et le troisième temps de retard, chacun correspond à un quart de longueur d'onde des impulsions radar, et le procédé comprenant en outre de déterminer, pour chaque premier et deuxième groupe de mesures, une première valeur représentant une différence entre un produit de mélange intégré des première et troisième mesures radar du groupe de mesures et une deuxième valeur représentant une différence entre un produit de mélange intégré des deuxième et quatrième mesures radar du groupe de mesures, dans lequel la première valeur et la deuxième valeur déterminées pour chaque groupe de mesures sont respectivement une estimation d'une composante en phase I et une estimation d'une composante en quadrature Q pour le groupe ;
    dans lequel la première pluralité de groupes de mesures s'étendent sur une première plage de distances de mesure et la deuxième pluralité de groupes de mesures s'étendent sur une deuxième plage de distances de mesure, en formant une sous-plage de la première plage, et

dans lequel un espacement en termes de distance de mesure entre des premiers groupes consécutifs de mesures dépasse un espacement en termes de distance de mesure entre des deuxièmes groupes consécutifs de mesures.

13. Procédé selon la revendication 12, comprenant en outre de :

estimer une première distance jusqu'à la cible radar sur la base des première et deuxième valeurs déterminées pour chaque premier groupe de mesures ;

déterminer ensuite les premier, deuxième, troisième et quatrième temps de retard pour chaque deuxième groupe de mesures de telle sorte que ladite première distance se situe dans la deuxième plage de distances ; et

estimer une deuxième distance jusqu'à la cible radar sur la base des première et deuxième valeurs déterminées pour chaque deuxième groupe de mesures.

14. Dispositif radar (100) comprenant :

un émetteur (110), un récepteur (120) et un circuit générateur d'impulsions (114, 124);

dans lequel le dispositif radar est configuré pour effectuer des première, deuxième, troisième et quatrième mesures radar, chaque mesure radar comprenant de :

générer par le circuit générateur d'impulsions (114) une impulsion radar respective, transmettre par l'émetteur l'impulsion radar respective vers une cible radar,

générer par le circuit générateur d'impulsions (124) une impulsion de référence respective, et

par le récepteur : recevoir un signal comprenant une réflexion de l'impulsion radar respective depuis la cible radar, en tant que signal reçu respectif, mélanger le signal reçu respectif avec l'impulsion de référence respective pour obtenir un produit de mélange respectif, et intégrer le produit de mélange respectif pour obtenir un produit de mélange intégré respectif ;

dans lequel, dans les première, deuxième, troisième et quatrième mesures radar, le circuit générateur d'impulsions génère l'impulsion de référence respective avec un retard par rapport à l'impulsion radar respective réglée sur un premier, deuxième, troisième et quatrième temps de retard, respectivement, une différence entre le deuxième et le premier temps de retard, entre le troisième et le deuxième temps de retard et entre le quatrième et le troisième temps de retard, chacun correspondant à un quart de longueur d'onde des impulsions radar ; et

le dispositif radar comprenant en outre un processeur de signal (140) configuré pour déterminer une première valeur représentant une différence entre le produit de mélange intégré respectif des première et troisième mesures radar, et une deuxième valeur représentant une différence entre le produit de mélange intégré respectif des deuxième et quatrième mesures radar, dans lequel la première valeur est une estimation d'une composante en phase I et la deuxième valeur est une estimation d'une composante en quadrature Q.

15. Dispositif radar selon la revendication 14, comprenant en outre un convertisseur analogique-numérique (142), dans lequel les première, deuxième, troisième et quatrième mesures radar comprennent chacune en outre la conversion, par le convertisseur analogique-numérique, du produit de mélange intégré respectif en une valeur numérique, dans lequel une première, deuxième, troisième et quatrième valeur numérique sont obtenues, et

dans lequel le circuit de traitement est configuré pour déterminer la première valeur en calculant une différence entre la première et la troisième valeur numérique, et la deuxième valeur en calculant une différence entre la deuxième et la quatrième valeur numérique.

**Fig. 1**

200

Measurement group i

**210**
Perform first radar measurement
with first delay time setting

**220**
Perform second radar measurement
with second delay time setting

**230**
Perform third radar measurement
with third delay time setting

**240**
Perform fourth radar measurement
with fourth delay time setting

**250**
Determine first difference and
second difference

Repeat with
same or
updated delay
time settings

**260**
Compare first differences and/or
second differences

*Fig. 2*

**Fig. 3**

**Fig. 4**

**_Fig. 5_**

**_Fig. 6_**

**EP 4 187 280 B1**

**Patent documents cited in the description**

- US 20180011181 A1
- US 7248205 B2
- EP 2011058847 W